(19)

Europäisches
Patentamt
European
Patent Office
Office européen
des brevets

(11) **EP 2 745 546 B1**

(12) **EUROPEAN PATENT SPECIFICATION**

(45) Date of publication and mention
of the grant of the patent:
**13.02.2019 Bulletin 2019/07**

(21) Application number: **12824249.2**

(22) Date of filing: **14.08.2012**

(51) Int Cl.:
*H04W 24/00* (2009.01)     *H04L 25/02* (2006.01)
*H04B 7/04* (2017.01)

(86) International application number:
**PCT/IB2012/001889**

(87) International publication number:
**WO 2013/024350 (21.02.2013 Gazette 2013/08)**

(54) **METHOD AND APPARATUS FOR CHANNEL MEASUREMENT AND FEEDBACK OF MULTI-DIMENSIONAL ANTENNA ARRAY**

VERFAHREN UND VORRICHTUNG FÜR KANALMESSUNG UND FEEDBACK IN EINEM MEHRDIMENSIONALEN ANTENNENARRAY

PROCÉDÉ ET APPAREIL POUR MESURE DE CANAL ET RETOUR D'INFORMATIONS D'UN RÉSEAU D'ANTENNES MULTIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2011 CN 201110233547**

(43) Date of publication of application:
**25.06.2014 Bulletin 2014/26**

(73) Proprietor: **Alcatel Lucent**
**91620 Nozay (FR)**

(72) Inventors:
• **LI, Dong**
  **Shanghai 201206 (CN)**
• **WU, Lu**
  **201206 Shanghai (CN)**
• **YANG, Hongwei**
  **Shanghai 201206 (CN)**

(74) Representative: **Nokia EPO representatives**
**Nokia Technologies Oy**
**Karaportti 3**
**02610 Espoo (FI)**

(56) References cited:
**WO-A1-2011/043328     WO-A1-2012/151143**
**WO-A2-2012/112281     CN-A- 101 877 865**
**CN-A- 102 082 636     US-A1- 2011 194 551**

• **ALCATEL-LUCENT SHANGHAI BELL ET AL: "Considerations on CSI feedback enhancements for high-priority antenna configurations", 3GPP DRAFT; R1-112420 CONSIDERATIONS ON CSI FEEDBACK ENHANCEMENTS FOR HIGH-PRIORITY ANTENNA CONFIGURATIONS_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537814, [retrieved on 2011-08-18]**

**EP 2 745 546 B1**

**Description**

TECHNICAL FIELD

Embodiments of the present invention generally relate to the wireless communication field, and more specifically, to methods and apparatuses for the channel measurement and feedback of a multi-dimensional antenna array.

DESCRIPTION OF THE RELATED ART

Long Term Evolution (LTE)/Long Term Evolution-Advanced (LTE-A) standard and system (e.g., LTE-A R10 system) of the 3rd Generation Partnership Project (3GPP) are defined and designed primarily for one-dimensional antenna arrays (e.g., uniform linear arrays) at present. In such standard and system, only azimuth angles of departure and arrival of an antenna signal on the horizontal plane are taken into consideration. In other words, in existing schemes, the design of system channel measurement and feedback is merely based on the single-dimensional antenna array assumption, which means only the horizontal signal propagation directivities are taken into account.

However, in actual application environments, the antenna signal propagates in space in three-dimensional manner. This characteristic is especially apparent in urban areas with increasingly high densities of high-rise buildings. To better adapt the channel and antenna design of communication systems to the spatial propagation mode of antenna signals, multi-dimensional spatial channel models and antenna arrays are attracting more and more interest. Based on the horizontal coverage provided by existing one-dimensional antenna arrays, multi-dimensional antenna arrays may further consider the signal coverage in other directions or at other dimensions. As an example, in a two-dimensional or three-dimensional antenna array, not only horizontal attributes of transmit or receive signals of the antenna array but also vertical attributes of transceiver signals may be taken into consideration.

WO 2012/151143 (published on 08.11.2012) and WO 2012/112281 (published on 23.08.2012) disclose specific uses of support channel state information reference signals.

There are several techniques designed for multi-dimensional channels and antenna arrays. For example, there have been proposed such techniques as vertical beamforming, vertical sectorization and vertical precoding for multi-dimensional antenna arrays. All these techniques require to obtain the channel information at the base station (also called eNB in the 3GPP), mainly the elevation angle in the vertical direction. Such kind of elevation angles is generally estimated from uplink reference signals or traffic signals and can be used for downlink. However, in a modern communication system like a frequency-division demultiplexing (FDD) system, uplink and downlink are not symmetric due to frequency offset. Therefore, the elevation angle estimation error might affect the system performance.

Another kind of feasible solutions is that user equipment (UE) performs multi-dimensional channel measurement for an antenna array on demand and directly feeds to the base station a result of the multi-dimensional channel measurement over uplink. However, currently known standards are all designed and developed for the measurement and feedback of one-dimensional antenna arrays and thus cannot be efficiently used for the channel measurement and feedback of multi-dimensional antenna arrays. For example, it is known that the UE can perform channel estimation and codebook codeword selection according to a received channel state information reference signal (CSI-RS) and then feed a channel CSI measurement result back by transmitting precoding matrix indication (PMI) to the base station. However, the current 3GPP LTE/LTE-A standard only supports the CSI feedback policy of single-dimensional antenna arrays, i.e., returning PMI codeword for single-dimensional antenna array CSI in each channel feedback sub-frame. Hence, the current system's channel measurement and feedback standard cannot feed back to the base station device multi-dimensional channel state information applying multi-dimensional antenna arrays.

Therefore, there is a need for a technical solution for effectively and accurately enabling the channel measurement and feedback of multi-dimensional antenna arrays while reducing the impact on existing solutions/systems as much as possible.

SUMMARY

To solve the foregoing problem in the art, the embodiments of the present invention propose a solution for the channel measurement and feedback of multi-dimensional antenna arrays.

The core idea of the present invention is to allow a base station equipped with a multi-dimensional antenna array to configure more than one class of CSI-RS, wherein each class of CSI-RS is for use in the channel measurement at the UE for a different signal propagation directivity of the multi-dimensional antenna array. The configuration information includes at least one of: information on sub-frames transmitting such class of CSI-RS, transmission cycle of such CSI-RS, codebook used by the user equipment when feeding back a channel measurement for such CSI-RS and physical resources used by such CSI-RS. The base station then transmits the generated configuration information to the UE, so that the UE may perform channel measurements specific to different signal propagation directivities (e.g., by selecting different codebooks for the channel measurement for different dimensions). In this way, it is possible to increase the channel measurement accuracy of the multi-dimensional antenna array, reduce the measurement feedback overhead and improve the system performance.

According to a first aspect of the present invention, there is provided a method for enabling the channel measurement and feedback of a multi-dimensional antenna array in a wireless communication system. The method comprises: generating the configuration information for at least two classes of channel state information reference signals (CSI-RS), wherein each of the at least two classes of CSI-RS is for use in a channel measurement at the user equipment for a different signal propagation directivity of the multi-dimensional antenna array; and transmitting the configuration information to the user equipment, so that the user equipment receives the at least two classes of CSI-RS based on the configuration information.

According to a second aspect of the present invention, there is provided a method for enabling the channel measurement and feedback of a multi-dimensional antenna array in a wireless communication system. The method comprises: receiving from a base station the configuration information for at least two classes of channel state information reference signals (CSI-RS), wherein each of the at least two classes of CSI-RS is for use in a channel measurement for a different signal propagation directivity of the multi-dimensional antenna array; and receiving the at least two classes of CSI-RS from the base station according to the configuration information, for performing and feeding back the channel measurements for different signal propagation directivities of the multi-dimensional antenna array.

According to a third aspect of embodiments of the present invention, there is provided an apparatus for enabling the channel measurement and feedback of a multi-dimensional antenna array in a wireless communication system. The apparatus comprises: configuration information generating means for generating the configuration information for at least two classes of channel state information reference signals (CSI-RS), wherein each of the at least two classes of CSI-RS is for use in a channel measurement at a user equipment for a different signal propagation directivity of the multi-dimensional antenna array; and configuration information transmitting means for transmitting the configuration information to the user equipment, so that the user equipment receives the at least two classes of CSI-RS based on the configuration information.

According to a fourth aspect of the present invention, there is provided an apparatus for enabling the channel measurement and feedback of a multi-dimensional antenna array in a wireless communication system. The apparatus comprises: configuration information receiving means for receiving from a base station the configuration information for at least two classes of channel state information reference signals (CSI-RS), wherein each of the at least two classes of CSI-RS is for use in a channel measurement for a different signal propagation directivity of the multi-dimensional antenna array; and reference signal receiving means for receiving the at least two classes of CSI-RS from the base station according to the configuration information, for performing and feeding back the channel measurement for different signal propagation directivities of the multi-dimensional antenna array.

BRIEF DESCRIPTION OF THE DRAWINGS

The above and other objects, features and advantages of the embodiments of the present invention will become easier to understand from the following detailed description with reference to the figures. In the figures, several feasible embodiments of the present invention are shown by way of illustration instead of limitation, wherein:

Fig. 1 shows a flowchart of a method 100 for enabling the channel measurement and feedback of multi-dimensional antennas in a wireless communication system according to an exemplary embodiment of the present invention;

Fig. 2 shows a flowchart of a method 200 for enabling the channel measurement and feedback of multi-dimensional antennas in a wireless communication system according to an exemplary embodiment of the present invention;

Figs. 3A and 3B show schematic views of frame structures that CSI-RS are alternately transmitted in different subframes;

Fig. 4 shows a flowchart of a method 400 for enabling the channel measurement and feedback of multi-dimensional antennas in a wireless communication system according to an exemplary embodiment of the present invention;

Fig. 5 shows a flowchart of a method 500 for enabling the channel measurement and feedback of multi-dimensional antennas in a wireless communication system according to an exemplary embodiment of the present invention;

Fig. 6 shows a block diagram of an apparatus 600 for enabling the channel measurement and feedback of multi-dimensional antennas in a wireless communication system according to an exemplary embodiment of the present invention; and

Fig. 7 shows a block diagram of an apparatus 700 for enabling the channel measurement and feedback of multi-dimensional antennas in a wireless communication system according to an exemplary embodiment of the present invention.

Like or corresponding reference signs represent the same or corresponding content or portions throughout the figures.

DETAILED DESCRIPTION OF THE PREFERRED EMBODIMENT

Detailed description will be presented below to embodiments of the present invention by referring to the figures. As described above and discussed below in detail, according to embodiments of the present invention, the base station equipped with a multi-dimensional antenna array is allowed to configure more than one class of CSI-RS, each class of CSI-RS will be used at the user equipment (UE) for a channel measurement for a different dimension of the antenna array. Subsequently, the base station may send the generated configuration information to the UE, allowing the UE to perform the channel measurement specific to different dimensions, for example, selecting different codebooks for the channel measurement for different dimensions. In this way, it is possible to increase the channel measurement precision of the multi-dimensional antenna array, lower the measurement feedback overhead and further improve the system performance.

It should be noted that in the context of the present application, the so-called multi-dimensional antenna array is deployed at the base station or eNodeB.

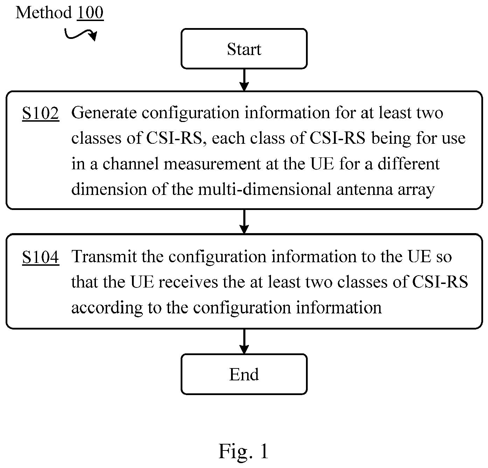

With reference now to Fig. 1, it shows a flowchart of a method 100 for enabling the channel measurement and feedback of a multi-dimensional antenna array in a wireless communication system according to an embodiment of the present invention. The method 100 may be implemented at the base station side in the communication system, for example, implemented by the base station or an associated component. Specifically, the base station is equipped with a multi-dimensional antenna array, e.g., a three-dimensional antenna array.

After the method 100 starts, in step S102, configuration information for at least two classes of channel state information reference signals (CSI-RS) is generated, wherein each class of CSI-RS will be transmitted to a UE for the channel measurement at the UE for the different dimension of the multi-dimensional antenna array. Unlike the prior art, the base station configures and transmits CSI-RS not only for the channel measurement for a single dimension, but also may configure at least two classes of CSI-RS for the channel measurement for different dimensions.

It should be noted that in the context of the present application, the channel state information reference signal CSI-RS may be cell-dedicated pilot for CSI estimation (CQI/PMI/RI) as defined in LTE-A R10, or any proper downlink reference signal that is currently known or to be developed in future. The scope of the present invention is not limited in this regard.

For each class of CSI-RS, the configuration information generated in step S102 may include, without limitation to, at least one of: information on sub-frames transmitting such class of CSI-RS, e.g., offset of sub-frames transmitting the CSI-RS; transmission cycle of such CSI-RS; codebook used by the UE when feeding back the channel measurement for such CSI-RS; physical resources used by CSI-RS, etc.

The method 100 subsequently proceeds to step S104 where the configured information generated in step S102 is transmitted to the user equipment (UE). According to embodiments of the present invention, the base station may transmit the CSI-RS configuration information by using any proper signaling that is currently known or to be developed in future. In subsequent operations, the base station will transmit the at least two classes CSI-RS to the UE according to the configuration information. Accordingly, according to the configuration for the at least two classes of CSI-RS as received from the base station, the UE may receive from the base station different classes of CSI-RS to perform channel measurements for different dimensions, which will be detailed below.

The method 100 ends after step S104. Hence, the base station may configure at least two classes CSI-RS for the channel measurement for different dimensions, and transmit the configuration information to the UE. In this way, the UE may perform channel measurements for different dimensions according to different classes of CSI-RS (e.g., selecting different codebooks for the channel measurement for different dimensions, etc.) and feed back a measurement result.

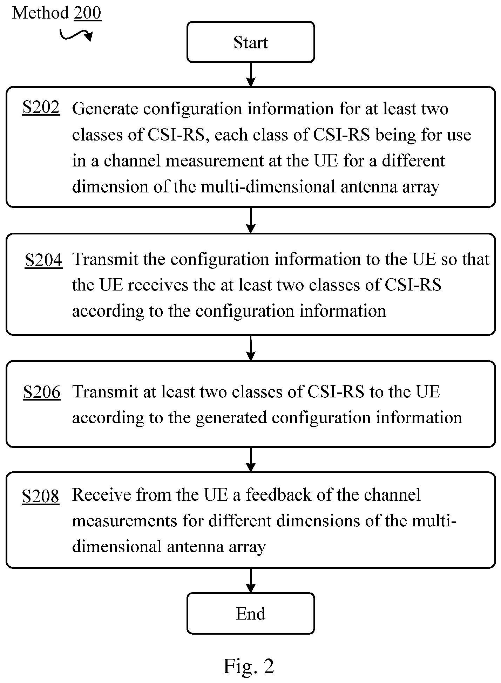

With reference now to Fig. 2, operations performed at the base station side will be further illustrated by a more detailed exemplary embodiment. Fig. 2 shows a flowchart of a method 200 for enabling the channel measurement and feedback of a multi-dimensional antenna array in a wireless communication system according to an embodiment of the present invention. Like the method 100, the method 200 is also performed at the base station side that is equipped with a multi-dimensional antenna array. The method 200 may be regarded as a specific, refined embodiment of the method 100.

After the method 200 starts, configuration information for at least two classes of channel state information reference signals CSI-RS is generated in step S202, wherein each class of CSI-RS will be transmitted to a UE for use in the channel measurement for a different dimension of the multi-dimensional antenna array at the UE. It can be understood that step S202 of the method 200 corresponds to step S102 of the method 100, and the corresponding features and details are therefore not detailed here.

Specifically, according to some embodiments of the present invention, the configuration information generated in step S202 may indicate that the at least two classes of CSI-RS are transmitted to the user equipment in the same sub-frame at the same time. For example, the base station may configure different classes of CSI-RS for the channel measurement for different dimensions in such a way that each class of CSI-RS is transmitted to the UE in the same sub-frame (e.g., having the same sub-frame offset). In these embodiments, the UE will receive different CSI-RS in the same sub-frame at the same time. Then the UE may perform channel measurements for the multi-dimensional antenna array at different dimensions according to the specific parameters and information in the CSI-RS, and provide the measurement feedback to the base station at the same time, which will be detailed below.

Alternatively, in other embodiments, the configuration information generated in step S202 may indicate that different classes CSI-RS are alternately transmitted in different sub-frames. For example, the base station may configure different classes of CSI-RS for the channel measurement for different dimensions in such a way that respective classes of CSI-RS are transmitted to the UE in different sub-frames of one frame (i.e., having different sub-frame offsets). In other words, CSI-RS to be used for the channel measurements for different dimensions are alternately transmitted to the UE. In these embodiments, the UE will receive different classes of CSI-RS in different sub-frames alternately and perform channel measurements for the multi-dimensional antenna array in corresponding dimensions. Then the UE alternately provides the channel measurement feedback to the base station as well, which will be detailed below.

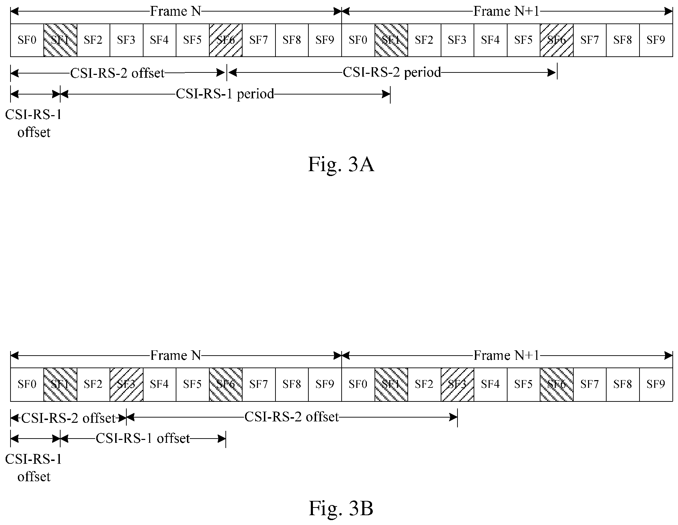

Specifically, when different classes of CSI-RS are transmitted in different sub-frames alternately, the base station may generate configuration information such that the cycles for transmitting different classes of CSI-RS are equal. In other words, regarding different classes of CSI-RS, lengths of the intervals between two successive CSI-RS transmissions are equal. Referring to Fig. 3A for example, this figure shows a schematic view of such a frame structure. In the embodiment shown in Fig. 3A, the offset of the first class of CSI-RS (shown as CSI-RS-1) is 1 sub-frame, and the offset of the second class of CSI-RS (shown as CSI-RS-2) is 6 sub-frames. The transmission cycles of these two different classes of CSI-RS are both 10 sub-frames.

Alternatively, when different classes of CSI-RS are transmitted in different sub-frames alternately, the base station may generate configuration information such that the cycles for transmitting different classes of CSI-RS are different. In other words, regarding different classes of CSI-RS, lengths of the intervals between two successive CSI-RS transmissions are not equal. Referring to Fig. 3B for example, this figure shows a schematic view of such a frame structure. In the example shown in Fig. 3B, the offset of the first class of CSI-RS (shown as CSI-RS-1) is 1 sub-frame, the transmission cycle thereof is 5 sub-frames; the offset of the second class of CSI-RS (shown as CSI-RS-2) is 3 sub-frames, and the transmission cycle thereof is 10 sub-frames.

In some instants, the embodiment shown in Fig. 3B may be advantageous. For example, considering the horizontal and vertical channel measurement in the multi-dimensional antenna array, it can be understood that the vertical channel attribute is generally more stable than the horizontal channel attribute. Specifically, compared with the horizontal signal spread, the signal vertical AoD does not change dramatically. At this point, the scheme shown in Fig. 3B is preferred, i.e., the transmission cycle of CSI-RS for the vertical channel measurement is set to be larger than the transmission cycle of CSI-RS for the horizontal channel measurement. In this way, it is possible to lower the system overhead as much as possible while ensuring the multi-dimensional channel measurement.

Still referring to Fig. 2, the method 200 proceeds to step S204 where the configuration information generated in step S202 is transmitted to the UE, so that the UE receive the at least two classes of CSI-RS based on the configuration information for measurement and feedback of the multi-dimensional channel. In step S204, various proper means that are currently known or to be developed in future may be used to transmit the CSI-RS configuration information. For example, it is possible to use, at least partially, existing signaling in the LTE/LTE-A standard to transmit the CSI-RS configuration information. It may be understood that in most cases the channel measurement for the multi-dimensional antenna array contains the channel measurement for horizontal dimension. Meanwhile, the existing LTE/LTE-A system has defined CSI-RS configuration signaling for the horizontal channel measurement. In this case, the existing standard signaling may be used to transmit the horizontal CSI-RS configuration and meanwhile, the additional signaling is used to transmit the CSI-RS configuration of other dimensions (e.g., vertical dimension). In this way, the compatibility with existing systems may be ensured to the maximum extent.

In step S206, the base station may transmit the at least two classes of CSI-RS to the UE according to the configuration information generated in step S202. Specifically, according to the configuration generated in step S202, the base station may simultaneously transmit multiple classes of CSIRS to the UE in the same sub-frame or alternately transmit multiple classes of CSI-RS to the UE in different sub-frames in step S206. Moreover, when different classes of CSI-RS are alternately transmitted in different sub-frames, the transmission cycles of the classes of CSI-RS may be the same or different, which may be dynamically set according to application requirements and other factors.

According to embodiments of the present invention, the specific content of each class of CSI-RS may be determined using any proper technical means that is currently known or to be developed in future. As an example, considering a three-dimensional antenna array, suppose the channel measurement is performed on the three-dimensional antenna array at horizontal and vertical dimensions. Further suppose the three-dimensional antenna array is an antenna array with N columns (N is a natural number), and each column of antenna array consists of M transmit/receive (TX/RX) antennas. According to embodiments of the present invention, the three-dimensional antenna array may be virtualized to an array consisting of vertical antenna ports and horizontal antenna ports through appropriate CSI-RS port to physical antenna mapping. In this way, respective CSI-RS for horizontal antenna ports and vertical antenna ports may be generated.

Specifically, suppose the CSI-RS port number of the three-dimensional antenna array is set as $N_v$, i.e., the base station equipped with the three-dimensional antenna array transmits at most $N_v$ data streams. According to embodiments of the present invention, the base station may select physical ports from horizontal and vertical linear arrays for mapping CSI-RS ports, wherein the horizontal and vertical physical antenna number is larger than or equal to $N_v$. The configuration information of different classes of CSI-RS containing horizontal and vertical CSI-RS port numbers may be informed of the UE by the base station.

It should be noted that according to embodiments of the present invention, CSI-RS for different dimensions may be transmitted using the same CSI-RS pattern defined in system specifications. However, it may be understood that the CSI-RS content may vary for the channel measurement for different dimensions (for example, different measurement dimensions have different CSI test port numbers, etc.). Therefore, according to embodiments of the present invention, when transmitting different classes of CSI-RS to the UE, the base station may use explicit signaling to inform the UE of content of each class of CSI-RS (e.g., the location of occupied physical resource, the number of corresponding CSI test ports, etc.).

Returning to Fig. 2, the method 200 proceeds to step S208 where the base station receives from the UE the channel measurement feedback of different dimensions of the multi-dimensional antenna array, wherein each kind of channel measurement feedback is generated by the UE according to a corresponding class of CSI-RS, which will be detailed below.

Specifically, it may be understood that if the base station simultaneously transmits different classes of CSI-RS to the UE in the same sub-frame, then the UE may simultaneously transmit the channel measurement feedback of different dimensions to the base station in the same feedback transmission time period. Alternatively, if the base station alternately transmits different classes of CSI-RS to the UE in different sub-frames, then the UE alternately provides the channel measurement feedback of different dimensions to the UE in different feedback time periods.

It can be understood that after the base station receives from the UE the channel measurement feedback for different dimensions of the antenna array, the base station may perform multi-dimensional precoding for that the UE. For example, based on the channel measurement feedback, the base station may determine weighting coefficients for CSI-RS ports. This may be implemented by any proper method that is currently known or to be developed in future, e.g., zero forcing method. Hence, it is possible to obtain at least two weighting coefficient vectors of CSI-RS ports at different dimensions. For example, weighting coefficients of all antenna ports may be obtained by solving the product of the obtained vertical weighting coefficient column vector and horizontal weighting coefficient row vector. This is merely an example, and the scope of the present invention is not limited in this regard.

The method 200 ends after step S208.

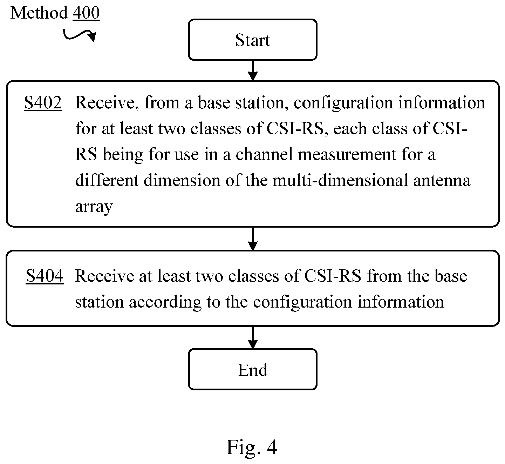

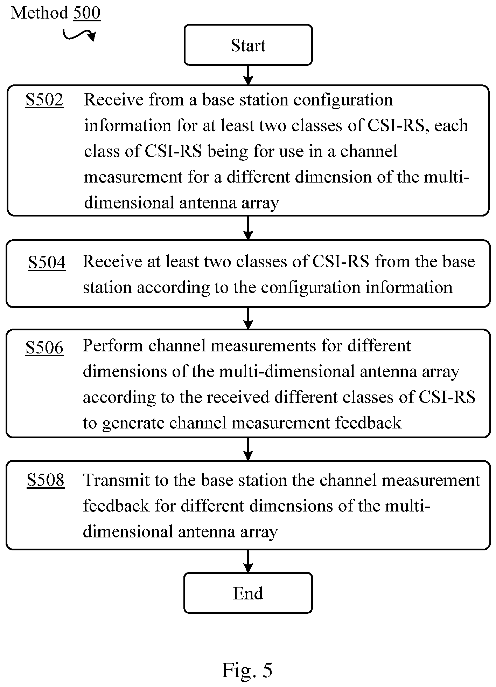

The methods 100 and 200 implemented at the base station side according to the embodiments of the present invention have been described above with reference to Figs. 1 and 2, respectively. Hereinafter, methods implemented at the user equipment (UE) side according to the embodiments of the present invention will be described below with reference to Figs. 4 and 5.

With reference now to Fig. 4, this figure shows a flowchart of a method 400 for enabling the channel measurement and feedback of a multi-dimensional antenna array in a wireless communication system according to an embodiment of the present invention. The method 400 may be implemented at the user equipment (UE) side, for example, implemented by the UE or an associated component.

After the method 400 starts, in step S402, the UE receives from the base station configuration information for at least two classes of channel state information reference signals CSI-RS, wherein each class of CSI-RS is for use in a channel measurement at the UE for a different dimension of the multi-dimensional antenna array that is deployed at the base station. Unlike the prior art, the UE receives from the base station the configuration information of more than one class of CSI-RS, instead of receiving the configuration information of only one class of CSI-RS for the single-dimensional channel measurement.

As described above, for each class of CSI-RS, the configuration information received in step S402 may include, without limitation to, at least one of: information on sub-frames transmitting CSI-RS, e.g., offset of sub-frames transmitting each class of CSI-RS; transmission cycle of CSI-RS; codebook used in the channel feedback; physical resources used by CSI-RS, etc.

The method 400 then proceeds to step S404 where the UE receives the at least two classes of CSI-RS from the base station according to the configuration information received in step S402, for performing and feeding back the channel measurement for different dimensions of the multi-dimensional antenna array. In this way, the UE may perform channel measurements for different dimensions of the multi-dimensional antenna array according to the different classes of CSI-RS received from the base station. Thus, the UE may provide the base station with the channel measurement feedback covering multiple dimensions, being more accurate and useful.

The method 400 ends after step S404. The UE has received from the base station the configuration information for at least two classes of CSI-RS, wherein each class of CSI-RS is for use in the channel measurement for a different dimension. In this way, according to the configuration information, the UE may receive different classes of CSI-RS from the base station so as to perform the channel measurements and feedback for different dimensions.

With reference now to Fig. 5, operations performed at the UE side will be further illustrated by a more detailed exemplary embodiment. Fig. 5 shows a flowchart of a method 500 for enabling the channel measurement and feedback of a multi-dimensional antenna array in a wireless communication system according to an embodiment of the present invention. Like the method 400, the method 500 is also performed at the UE side. The method 500 may be regarded as a specific, refined embodiment of the method 500.

After the method 500 starts, the UE receives configurations of at least two classes of CSI-RS from the base station in step S502, wherein each class of CSI-RS is for use in the channel measurement for a different dimension of the multi-dimensional antenna array. It can be understood that step S502 of the method 500 corresponds to step S402 of the method 400, so the corresponding features and details are not detailed here.

As described above, the configurations for the at least two classes of CSI-RS as received in step S502 may indicate that different classes of CSI-RS are simultaneously transmitted in the same sub-frame or alternately transmitted in different sub-frames.

Next, in step S504, the UE may receive different classes of CSI-RS from the base station according to the CSI-RS configuration information received in step S502. According to some embodiments of the present invention, as described above, the configuration information may indicate that different classes of CSI-RS are simultaneously transmitted in the same sub-frame. At this point, in step S502 the UE may simultaneously receive multiple classes of CSI-RS in the same sub-frame.

Alternatively, the configuration information may indicate that different classes CSI-RS are alternately transmitted in different sub-frames. At this point, in step S502, the UE alternately receives from the base station at least two classes of CSI-RS in different sub-frames. In this case, as described above, the configuration information may further indicate that the transmission cycles of different classes of CSI-RS are the same. Accordingly, the UE may receive from the base station at least two classes of CSI-RS in the same cycle according to the configuration information. Or the configuration information may indicate that the transmission cycles of different classes of CSI-RS are different. Accordingly, the UE may receive from the base station at least two classes of CSI-RS in different cycles according to the configuration information.

The method 500 then proceeds to step S506 where the UE performs channel measurements for different dimensions of the multi-dimensional antenna array according to the different classes of CSI-RS received from the base station. For example, the UE my use the precoding matrix indication (PMI) by selecting a codebook, to quantize the channel measurement. In this case, for different classes of CSI-RS for different measurement dimensions, the UE may select different codebooks to generate different PMI during the channel measurement. In other words, by selecting different codebooks, the UE may generate a different PMI for each measurement dimension, so that the CSI quantization is specific to a dimension. As such, the channel measurement for the multi-dimensional antenna array becomes more accurate and reliable.

In conjunction with a specific example, detailed description will be presented below to an exemplary embodiment regarding the channel measurement for different dimensions based on PMI and codebook selection at the UE. As described above, according to embodiments of the present invention, the multi-dimensional channel measurement at the UE may be completed by selecting different codebooks for different dimensions. According to embodiments of the present invention, codebooks for different dimensions may be derived from a common codebook according to different codeword subset restrictions.

For example, it is known that the existing standard has defined the codebook used for the horizontal CSI channel measurement and feedback. The inventors have found that for an antenna signal, the angle spreads at other dimensions (e.g., elevation change at the vertical dimension) are generally much smaller than the angle spread at the horizontal dimension. As a result, according to embodiments of the present invention, codebooks for the channel measurement at other dimensions may be derived from the codebook for the channel measurement at the horizontal dimension by applying corresponding codeword subset restrictions. In this way, it is possible to keep the good compatibility with existing systems and reduce the change to existing systems as much as possible.

Here, consider a specific example of a codebook for the vertical channel measurement. According to embodiments of the present invention, the codebook for the vertical channel measurement for the multi-dimensional antenna array may be a codebook subset, which conforms to the Discrete Fourier Transform (DFT) codebook, from a common codebook. Generally speaking, the DFT codebook may be used for the vertical CSI measurement and feedback. According to embodiments of the present invention, the full codebook (denoted as $C_B^{(0)}$) for $N_{V\text{-CSI-RS}}$ vertical CSI-RS ports and codebook size of $2^{cb\_bits}$ can be defined as follows.

$$C_B^{(0)} = \left\{ cw_i^{(0)}, i = 0,1,\cdots,2^{cb\_bits} - 1 \right\} \tag{1}$$

where

$$cw_i^{(0)} = \frac{1}{\sqrt{N_{V-CSI-RS}}} \begin{pmatrix} 1 \\ e^{-j2\pi \cdot \frac{i}{2^{cb\_bits}}} \\ e^{-j2\pi \cdot \frac{2i}{2^{cb\_bits}}} \\ \vdots \\ e^{-j2\pi \cdot \frac{(N_{V-CSI-RS}-1)i}{2^{cb\_bits}}} \end{pmatrix} \tag{2}$$

where j denotes the imaginary unit (i.e., j=sqrt(-1)), and i denotes the codeword index in the codebook.

According to a further embodiment of the present invention, in order to reduce the measurement and feedback overhead, the size of the full codebook $C_B^{(0)}$ can be squeezed by appropriate codewords sampling. For example, it is possible to define two reduced codebooks as follows, with codebook sizes of cb_bits-1 bits and cb_bits-2 bits, respectively.

$$\begin{aligned} C_B^{(1)} &= \left\{ cw_i^{(1)}, i = 0,1,\cdots,2^{cb\_bits-1} - 1 \right\} \\ &= \left\{ cw_i^{(1)} = cw_{2i}^{(0)}, i = 0,1,\cdots,2^{cb\_bits-1} - 1 \right\} \end{aligned} \tag{3}$$

$$\begin{aligned} C_B^{(2)} &= \left\{ cw_i^{(2)}, i = 0,1,\cdots,2^{cb\_bits-2} - 1 \right\} \\ &= \left\{ cw_i^{(2)} = cw_{4i}^{(0)}, i = 0,1,\cdots,2^{cb\_bits-2} - 1 \right\} \end{aligned} \tag{4}$$

Hence, according to CSI-RS for the vertical measurement received from the base station and the specific application environment, the UE may select the full codebook or one of the reduced codebooks for the channel measurement. The inventors have found that the resolution of the elevation angle between a base antenna element and the UE reduces as the interval between antenna elements at the base station increases. Therefore, if there is no need for small-angle resolution granularity, then the reduced codebooks in equations (3) and (4) may be used to lower the feedback overhead.

Specifically, in the context of LTE-A, if there are two vertical antenna ports, then the codebook defined in the LTE-A specification is actually consistent with the codebook defined in equations (1) and (2). Thus in this case, the existing LTE-A RIO codebook (2bits, single layer) can be used for vertical CSI measurement and feedback.

In case of four vertical antenna ports, it is found through checking the phase characteristics of the LTE-A RIO codebooks and codewords that among the total 16 codewords of the existing LTE-A codebook, 8 codewords contain elevation angle information. It is further observed that these 8 codewords are actually codeword sampling of the full DFT codebook and correspond to the 8 codewords of the DFT codbook $C_B^{(1)}$ defined in equation (3). Thus, the existing codebook for the horizontal measurement can be used for the vertical measurement by applying appropriate codeword subset restrictions to the existing LTE-A RIO codebook.

In practice, the case of 8 vertical antenna ports is rather infrequent. Even in this case, it is possible to configure only 4 vertical CSI-RS ports (which map to 4 adjacent vertical antenna ports) and implement the three-dimensional precoding at the base station using all the vertical antenna ports through the vertical extension.

Returning to Fig. 5, the method 500 then proceeds to step S508 where the UE transmits to the base station the channel measurement feedback for at least two dimensions as generated in step S506. It may be understood that if in step S504 the UE simultaneously receives more than one class of CSI-RS in the same sub-frame, then in step S508 the UE may simultaneously transmit to the base station the channel measurement feedback for a plurality of different dimensions (e.g., the PMI for a plurality of dimensions) in a single feedback transmission time period. On the contrary, if in step S504 the UE alternately receives more than one class of CSI-RS in different sub-frames, then in step S508 the UE may also alternately transmit the channel measurement feedback for different dimensions in different feedback transmission time periods.

The method 500 ends after step S508.

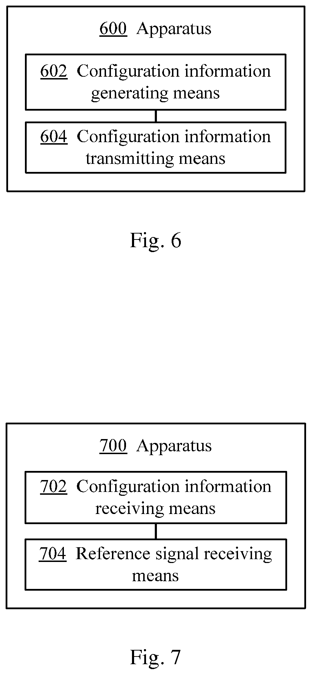

With reference now to Fig. 6, this figure shows a block diagram of an apparatus for enabling the channel measurement and feedback of a multi-dimensional antenna array in a wireless communication system according to an exemplary embodiment of the present invention. According to embodiments of the present invention, the apparatus 600 may reside at a base station in the wireless communication system or otherwise be associated with the base station. Specifically, the apparatus 600 may be configured to implement the methods 100 and 200 described above.

As shown in Fig. 6, according to embodiments of the present invention, the apparatus 600 comprises: configuration information generating means 602 for generating configuration information used for at least two classes of channel state information reference signals CSI-RS, wherein each of the at least two classes of CSI-RS is for use in a channel measurement at a user equipment for a different dimension of the multi-dimensional antenna array. The apparatus 600 further comprises configuration information transmitting means 604 for transmitting the configuration information to the user equipment, so that the user equipment receives the at least two classes of CSI-RS based on the configuration information.

According to some embodiments of the present invention, the apparatus 600 may further comprise reference signal transmitting means (not shown) for transmitting the at least two classes of CSI-RS to the user equipment according to the configuration information.

According to some embodiments of the present invention, the configuration information generating means 602 may comprise: first generating means for generating configuration information indicating that the at least two classes of CSI-RS are to be simultaneously transmitted to the user equipment in the same sub-frame. Alternatively or additionally, the configuration information generating means 602 may comprise: second generating means for generating configuration information indicating that the at least two classes of CSI-RS are to be alternately transmitted to the user equipment in different sub-frames.

According to some embodiments of the present invention, the second generating means may comprise: third generating means for generating configuration information indicating that the at least two classes of CSI-RS are transmitted to the user equipment in different sub-frames in the same cycle. Alternatively or additionally, the second generating means may comprise: fourth generating means for generating configuration information indicating that the at least two classes of CSI-RS are transmitted to the user equipment in different sub-frames in different cycles.

According to embodiments of the present invention, the at least two classes of CSI-RS processed by the apparatus 600 may comprise: a first class of CSI-RS for a horizontal channel measurement made at the user equipment on the multi-dimensional antenna array; and a second class of CSI-RS for a vertical channel measurement made at the user equipment on the multi-dimensional antenna array.

In addition, according to some embodiments of the present invention, the apparatus 600 may further comprise: feedback receiving means (not shown) for receiving from the user equipment channel measurement feedback regarding different dimensions of the multi-dimensional antenna array.

As described above, the apparatus 600 as shown in Fig. 6 may function as the executing entity of the above-described methods 100 and 200. Therefore, various features described with reference to Figs. 1 and 2 are all applicable to the apparatus 600, which are not detailed here.

With reference now to Fig. 7, this figure shows a block diagram of an apparatus 700 for enabling the channel measurement and feedback of a multi-dimensional antenna array in a wireless communication system according to an exemplary embodiment of the present invention. According to embodiments of the present invention, the apparatus 700 may reside at user equipment (UE) in the wireless communication system or otherwise be associated with the UE. Specifically, the apparatus 700 may be configured to implement the methods 400 and 500 described above.

As shown in Fig. 7, according to embodiments of the present invention, the apparatus 700 comprises: configuration information receiving means 702 for receiving from a base station configuration information used for at least two classes of channel state information reference signals CSI-RS, wherein each of the at least two classes of CSI-RS is for use in a channel measurement for a different dimension of the multi-dimensional antenna array. The apparatus 700 further comprises: reference signal receiving means 704 for receiving the at least two classes of CSI-RS from the base station according to the configuration information, for performing and feeding back the channel measurement for different dimensions of the multi-dimensional antenna array. It should be noted that the actual performance of channel measurement is not necessarily implemented by the apparatus 700 but may be implemented by other apparatus or component at the UE side.

According to some embodiments of the present invention, the reference signal receiving means 704 may comprise: first reference signal receiving means for simultaneously receiving from the base station the at least two classes of CSI-RS in the same sub-frame according to the configuration information. Alternatively or additionally, the reference signal receiving means 704 may comprise: second reference signal receiving means for alternately receiving from the base station the at least two classes of CSI-RS in different sub-frames according to the configuration information.

According to some embodiments of the present invention, the second reference signal receiving means may comprise: third reference signal receiving means for receiving from the base station the at least two classes of CSI-RS in different sub-frames in the same cycle according to the configuration information. Alternatively or additionally, the second reference signal receiving means may comprise: fourth reference signal receiving means for receiving from the base station the at least two classes of CSI-RS in different sub-frames in different cycles according to the configuration information.

According to embodiments of the present invention, the at least two classes of CSI-RS processed by the apparatus 700 may at least comprise: a first class of CSI-RS for a horizontal channel measurement made at the user equipment on the multi-dimensional antenna array; and a second class of CSI-RS for a vertical channel measurement made at the user equipment on the multi-dimensional antenna array.

In addition, according to some embodiments of the present invention, the apparatus 700 may further comprise: measurement feedback means for transmitting to the base station the channel measurement feedback for different dimensions of the multi-dimensional antenna array.

According to some embodiments of the present invention, the channel measurement for different dimensions of the multi-dimensional antenna array is implemented by selecting different codebooks. Specifically, corresponding codebooks used for the channel measurement for different dimensions are derived based on a common codebook according to different codeword subset restrictions. Moreover, the codebook used for the vertical channel measurement is a codebook subset, which conforms to a Discrete Fourier Transform (DFT) codebook, from the common codebook.

As described above, the apparatus 700 as shown in Fig. 7 may be used as an executive entity of the above-described methods 400 and 500. Therefore, various features described with reference to Figs. 4 and 5 are all applicable to the apparatus 700, which are not detailed here.

It is to be understood that the division of the means of the apparatuses 600 and 700 is not limiting but exemplary. For example, the function of single means described above may be performed by a plurality of means. Instead, a plurality of means described above may be implemented by single means. The scope of the present invention is not limited in this regard. It is to be further understood that the means and sub-means comprised in the apparatuses 600 and 700 may be implemented in various forms, including software, hardware, firmware or any combination thereof. For example, in some embodiments each means of the apparatuses 600 and 700 may be implemented using software and/or firmware modules. Alternatively or additionally, the means of the apparatuses 600 and 700 may be implemented using hardware modules. For example, each means of the apparatuses 600 and 700 may be implemented as an integrated circuit (IC) chip or application-specific integrated circuit (ASIC). Each means of the apparatuses 600 and 700 may also be implemented as a system on chip (SOC). Other forms that are currently known or to be developed in future are also feasible.

The scope of the present invention is not limited in this regard.

The principles of the present invention have been illustrated above in conjunction with several exemplary embodiments. According to the embodiments of the present invention, it is possible to effectively increase the precision of channel measurement on the multi-dimensional antenna array, lower the measurement feedback overhead and keep the existing standard and system unchanged as much as possible. Therefore, the performance of the wireless communication system can be improved efficiently.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is to be understood that the figures and embodiments of the present invention are for the purpose of illustration only, rather than limiting the protection scope of the present invention.

Further, each block in the block diagram and/or flowchart and the combination thereof may be implemented by a hardware-based system that performs specified functions or operations, or by a combination of specific hardware and computer instructions. It will be appreciated that the figures and embodiments as discussed herein are only for the purpose of illustration, without limiting the scope of the present invention.

The methods as disclosed in the present invention can be implemented in software, hardware or combination of software and hardware. The hardware portion can be implemented by using dedicated logic; the software portion can be stored in a memory and executed by an appropriate instruction executing system such as a microprocessor, a personal computer (PC) or a mainframe computer. In a preferred embodiment, the present invention is implemented as software, including, without limitation to, firmware, resident software, micro-code, etc.

Moreover, the embodiments of the present invention may be implemented as a computer program product used by computers or accessible by computer-readable media that provide program code for use by or in connection with a computer or any instruction executing system. For the purpose of description, a computer-usable or computer-readable medium may be any tangible means that can contain, store, communicate, propagate, or transport the program for use by or in connection with an instruction execution system, apparatus, or device.

The medium may be an electric, magnetic, optical, electromagnetic, infrared, or semiconductor system (apparatus or device), or propagation medium. Examples of the computer-readable medium would include the following: a semiconductor or solid storage device, a magnetic tape, a portable computer diskette, a random access memory (RAM), a read-only memory (ROM), a hard disk, and an optical disk. Examples of the current optical disk include a compact disk read-only memory (CD-ROM), compact disk-read/write (CR-ROM), and DVD.

A system adapted for storing and/or executing program code according to embodiment of the present invention would include at least one processor that is coupled to a memory element directly or via a system bus. The memory element may include a local memory usable during actually executing the program code, a mass memory, and a cache that provides temporary storage for at least one portion of program code so as to decrease the number of times for retrieving code from the mass memory during execution.

An Input/Output or I/O device (including, without limitation to, a keyboard, a display, a pointing device, etc.) may be coupled to the system directly or via an intermediate I/O controller.

A network adapter may also be coupled to the system such that the data processing system can be coupled to other data processing systems, remote printers or storage devices via an intermediate private or public network.

A modem, a cable modem, and an Ethernet card are merely examples of a currently available network adapter.

It should be noted that some more specific technical details that are publicly known to those skilled in the art and that might be essential to the implementation of the present invention are omitted in the above description in order to make the present invention more easily understood.

The specification of the present invention has been presented for purposes of illustration and description, and is not intended to be exhaustive or limited to the invention in the form disclosed. Many modifications and variations will be apparent to those of ordinary skill in the art.

Therefore, the embodiments were chosen and described in order to best explain the principles of the invention and the practical application, and to enable others of ordinary skill in the art to understand that all modifications and alterations.

## Claims

1. A method (100, 200) for enabling channel measurement and feedback of a multi-dimensional antenna array in a wireless communication system, the method **characterized by**:

    generating (102, 202) configuration information for at least two classes of channel state information reference signals, CSI-RS, wherein each of the at least two classes of CSI-RS is for use in a channel measurement at a user equipment for a different signal propagation directivity of the multi-dimensional antenna array; and transmitting (104, 204) the configuration information to the user equipment, so that the user equipment receives the at least two classes of CSI-RS according to the configuration information,
    wherein the configuration information includes at least one of: information on sub-frames transmitting such class of CSI-RS, transmission cycle of such CSI-RS, codebook used by the user equipment when feeding back a channel measurement for such CSI-RS and physical resources used by such CSI-RS.

2. The method (100, 200) according to Claim 1, wherein the configuration information indicates that the at least two classes of CSI-RS are simultaneously transmitted to the user equipment in a same sub-frame.

3. The method (100, 200) according to Claim 1, wherein the configuration information indicates that the at least two classes of CSI-RS are alternately transmitted to the user equipment in different sub-frames.

4. The method (100, 200) according to Claim 3, wherein the configuration information indicates that the at least two classes of CSI-RS are transmitted to the user equipment in different sub-frames with equal cycles.

5. The method (100, 200) according to Claim 3, wherein the configuration information indicates that the at least two classes of CSI-RS are transmitted to the user equipment in different sub-frames with different cycles.

6. A method (400, 500) for enabling channel measurement and feedback of a multi-dimensional antenna array in a wireless communication system, the method **characterized by**:

receiving (402, 502), from a base station, configuration information for at least two classes of channel state information reference signals, CSI-RS, wherein each of the at least two classes of CSI-RS is for use in a channel measurement for a different signal propagation directivity of the multi-dimensional antenna array; and receiving (404, 504), from the base station, the at least two classes of CSI-RS according to the configuration information, for performing (506) and feeding back (508) channel measurements for different signal propagation directivities of the multi-dimensional antenna array, wherein the configuration information includes at least one of: information on sub-frames transmitting such class of CSI-RS, transmission cycle of such CSI-RS, codebook used by the user equipment when feeding back a channel measurement for such CSI-RS and physical resources used by such CSI-RS.

7. The method (400, 500) according to Claim 6, wherein the receiving the at least two classes of CSI-RS from the base station according to the configuration information comprises: simultaneously receiving the at least two classes of CSI-RS in a same sub-frame from the base station according to the configuration information.

8. The method (400, 500) according to Claim 6, wherein the receiving the at least two classes of CSI-RS from the base station according to the configuration information comprises: alternately receiving the at least two classes of CSI-RS in different sub-frames from the base station according to the configuration information.

9. The method (400, 500) according to Claim 8, wherein the alternately receiving the at least two classes of CSI-RS in different sub-frames from the base station according to the configuration information comprises: receiving from the base station the at least two classes of CSI-RS in different sub-frames with equal cycles according to the configuration information.

10. The method (400, 500) according to Claim 8, wherein the alternately receiving the at least two classes of CSI-RS in different sub-frames from the base station according to the configuration information comprises: receiving from the base station the at least two classes of CSI-RS in different sub-frames with different cycles according to the configuration information.

11. The method (400, 500) according to Claim 6, wherein the channel measurements for different signal propagation directivity of the multi-dimensional antenna array are performed by selecting different codebooks.

12. The method (400, 500) according to Claim 11, wherein codebooks used for the channel measurements for different signal propagation directivity of the multi-dimensional antenna array are derived from a common codebook according to respective codeword subset restrictions.

13. The method (400, 500) according to Claim 12, wherein a codebook used for a channel measurement for a vertical signal propagation directivity of the multi-dimensional antenna array is a codebook subset from the common codebook, the codebook subset conforming to a Discrete Fourier Transform (DFT) codebook.

14. An apparatus (600) for enabling channel measurement and feedback of a multi-dimensional antenna array in a wireless communication system, the apparatus **characterized by**:

configuration information generating means (602) for generating configuration information for at least two classes of channel state information reference signals, CSI-RS, wherein each of the at least two classes of CSI-RS is for use in a channel measurement at a user equipment for a different signal propagation directivity of the multi-dimensional antenna array; and configuration information transmitting means (604) for transmitting the configuration information to the user equipment, so that the user equipment receives the at least two classes of CSI-RS according to the configuration information, wherein the configuration information includes at least one of: information on sub-frames transmitting such class of CSI-RS, transmission cycle of such CSI-RS, codebook used by the user equipment when feeding back a channel measurement for such CSI-RS and physical resources used by such CSI-RS.

**15.** An apparatus (700) for enabling channel measurement and feedback of a multi-dimensional antenna array in a wireless communication system, the apparatus **characterized by**:

configuration information receiving means (702) for receiving from a base station configuration information for at least two classes of channel state information reference signals, CSI-RS, wherein each of the at least two classes of CSI-RS is for use in a channel measurement for a different signal propagation directivity of the multi-dimensional antenna array; and

reference signal receiving means (704) for receiving the at least two classes of CSI-RS from the base station according to the configuration information, for performing and feeding back channel measurements for different signal propagation directivity of the multi-dimensional antenna array,

wherein the configuration information includes at least one of: information on sub-frames transmitting such class of CSI-RS, transmission cycle of such CSI-RS, codebook used by the user equipment when feeding back a channel measurement for such CSI-RS and physical resources used by such CSI-RS.

**Patentansprüche**

**1.** Verfahren (100, 200) zum Ermöglichen einer Kanalmessung und einer Rückmeldung einer mehrdimensionalen Antennenanordnung in einem drahtlosen Kommunikationssystem, wobei das Verfahren **gekennzeichnet ist durch** Erzeugen (102, 202) von Konfigurationsinformationen für mindestens zwei Klassen von Kanalzustandsinformations-Bezugssignalen, CSI-RS, wobei jede der mindestens zwei Klassen CSI-RS ausgelegt ist, in einer Kanalmessung bei einem Anwendergerät für eine unterschiedliche Signalausbreitungsrichtwirkung der mehrdimensionalen Antennenanordnung verwendet zu werden; und

Senden (104, 204) der Konfigurationsinformationen zum Anwendergerät, derart, dass das Anwendergerät die mindestens zwei Klassen CSI-RS gemäß den Konfigurationsinformationen empfängt, wobei

die Konfigurationsinformationen Informationen über Unterblöcke, die derartige Klassen CSI-RS senden, den Sendezyklus derartiger CSI-RS, das Codebuch, das durch das Anwendergerät verwendet wird, wenn ein Kanalmessergebnis für derartige CSI-RS zurückgemeldet wird, und physische Betriebsmittel, die durch derartige CSI-RS verwendet werden, enthalten.

**2.** Verfahren (100, 200) nach Anspruch 1, wobei die Konfigurationsinformationen anzeigen, dass die mindestens zwei Klassen CSI-RS gleichzeitig in einem Unterblock zum Anwendergerät gesendet werden.

**3.** Verfahren (100, 200) nach Anspruch 1, wobei die Konfigurationsinformationen anzeigen, dass die mindestens zwei Klassen CSI-RS in verschiedenen Unterblöcken abwechselnd zum Anwendergerät gesendet werden.

**4.** Verfahren (100, 200) nach Anspruch 3, wobei die Konfigurationsinformationen anzeigen, dass die mindestens zwei Klassen CSI-RS in verschiedenen Unterblöcken mit gleichen Zyklen zum Anwendergerät gesendet werden.

**5.** Verfahren (100, 200) nach Anspruch 3, wobei die Konfigurationsinformationen anzeigen, dass die mindestens zwei Klassen CSI-RS in verschiedenen Unterblöcken mit verschiedenen Zyklen zum Anwendergerät gesendet werden.

**6.** Verfahren (400, 500) zum Ermöglichen einer Kanalmessung und einer Rückmeldung einer mehrdimensionalen Antennenanordnung in einem drahtlosen Kommunikationssystem, wobei das Verfahren **gekennzeichnet ist durch** Empfangen (402, 502) von einer Basisstation von Konfigurationsinformationen für mindestens zwei Klassen von Kanalzustandsinformations-Bezugssignalen, CSI-RS, wobei jede der mindestens zwei Klassen CSI-RS ausgelegt ist, in einer Kanalmessung für eine unterschiedliche Signalausbreitungsrichtwirkung der mehrdimensionalen Antennenanordnung verwendet zu werden; und

Empfangen (404, 504) von der Basisstation der mindestens zwei Klassen CSI-RS gemäß den Konfigurationsinformationen, um Kanalmessungen für verschiedene Signalausbreitungsrichtwirkungen der mehrdimensionalen Antennenanordnung durchzuführen (506) und zurückzumelden (508), wobei

die Konfigurationsinformationen Informationen über Unterblöcke, die derartige Klassen CSI-RS senden, den Sendezyklus derartiger CSI-RS, das Codebuch, das durch das Anwendergerät verwendet wird, wenn ein Kanalmessergebnis für derartige CSI-RS zurückgemeldet wird, und physische Betriebsmittel, die durch derartige CSI-RS verwendet werden, enthalten.

**7.** Verfahren (400, 500) nach Anspruch 6, wobei das Empfangen der mindestens zwei Klassen CSI-RS von der Basisstation gemäß den Konfigurationsinformationen Folgendes umfasst: gleichzeitiges Empfangen der mindestens zwei Klassen CSI-RS in demselben Unterblock von der Basisstation gemäß den Konfigurationsinformationen.

8. Verfahren (400, 500) nach Anspruch 6, wobei das Empfangen der mindestens zwei Klassen CSI-RS von der Basisstation gemäß den Konfigurationsinformationen Folgendes umfasst: abwechselndes Empfangen der mindestens zwei Klassen CSI-RS in verschiedenen Unterblöcken von der Basisstation gemäß den Konfigurationsinformationen.

9. Verfahren (400, 500) nach Anspruch 8, wobei das abwechselnde Empfangen der mindestens zwei Klassen CSI-RS in verschiedenen Unterblöcken von der Basisstation gemäß den Konfigurationsinformationen Folgendes umfasst: Empfangen von der Basisstation der mindestens zwei Klassen CSI-RS in verschiedenen Unterblöcken mit gleichen Zyklen gemäß den Konfigurationsinformationen.

10. Verfahren (400, 500) nach Anspruch 8, wobei das abwechselnde Empfangen der mindestens zwei Klassen CSI-RS in verschiedenen Unterblöcken von der Basisstation gemäß den Konfigurationsinformationen Folgendes umfasst: Empfangen von der Basisstation der mindestens zwei Klassen CSI-RS in verschiedenen Unterblöcken mit verschiedenen Zyklen gemäß den Konfigurationsinformationen.

11. Verfahren (400, 500) nach Anspruch 6, wobei die Kanalmessungen für verschiedene Signalausbreitungsrichtwirkungen der mehrdimensionalen Antennenanordnung durch Wählen verschiedener Codebücher durchgeführt werden.

12. Verfahren (400, 500) nach Anspruch 11, wobei Codebücher, die für die Kanalmessungen für verschiedene Signalausbreitungsrichtwirkungen der mehrdimensionalen Antennenanordnung verwendet werden, aus einem gemeinsamen Codebuch gemäß entsprechenden Codewortuntermengenbeschränkungen hergeleitet werden.

13. Verfahren (400, 500) nach Anspruch 12, wobei ein Codebuch, das für einen Kanalmessung für eine vertikale Signalausbreitungsrichtwirkung der mehrdimensionalen Antennenanordnung verwendet wird, eine Codebuchuntermenge aus dem gemeinsamen Codebuch ist, wobei die Codebuchuntermenge einem diskreten Fourier-Transformationscodebuch (DFT-Codebuch) entspricht.

14. Vorrichtung (600) zum Ermöglichen einer Kanalmessung und einer Rückmeldung einer mehrdimensionalen Antennenanordnung in einem drahtlosen Kommunikationssystem, wobei die Vorrichtung **gekennzeichnet ist durch**
ein Konfigurationsinformations-Erzeugungsmittel (602) zum Erzeugen von Konfigurationsinformationen für mindestens zwei Klassen von Kanalzustandsinformations-Bezugssignalen, CSI-RS, wobei jede der mindestens zwei Klassen CSI-RS ausgelegt ist, in einer Kanalmessung bei einem Anwendergerät für eine unterschiedliche Signalausbreitungsrichtwirkung der mehrdimensionalen Antennenanordnung verwendet zu werden; und
ein Konfigurationsinformations-Sendemittel (604) zum Senden der Konfigurationsinformationen zum Anwendergerät, derart, dass das Anwendergerät die mindestens zwei Klassen CSI-RS gemäß den Konfigurationsinformationen empfängt, wobei
die Konfigurationsinformationen Informationen über Unterblöcke, die derartige Klassen CSI-RS senden, den Sendezyklus derartiger CSI-RS, das Codebuch, das durch das Anwendergerät verwendet wird, wenn ein Kanalmessergebnis für derartige CSI-RS zurückgemeldet wird, und physische Betriebsmittel, die durch derartige CSI-RS verwendet werden, enthalten.

15. Vorrichtung (700) zum Ermöglichen einer Kanalmessung und einer Rückmeldung einer mehrdimensionalen Antennenanordnung in einem drahtlosen Kommunikationssystem, wobei die Vorrichtung **gekennzeichnet ist durch**
ein Konfigurationsinformations-Empfangsmittel (702) zum Empfangen von einer Basisstation von Konfigurationsinformationen für mindestens zwei Klassen von Kanalzustandsinformations-Bezugssignalen, CSI-RS, wobei jede der mindestens zwei Klassen CSI-RS ausgelegt ist, in einer Kanalmessung für eine unterschiedliche Signalausbreitungsrichtwirkung der mehrdimensionalen Antennenanordnung verwendet zu werden; und
ein Bezugssignalempfangsmittel (704) zum Empfangen der mindestens zwei Klassen CSI-RS von der Basisstation gemäß den Konfigurationsinformationen, um Kanalmessungen für verschiedene Signalausbreitungsrichtwirkungen der mehrdimensionalen Antennenanordnung durchzuführen und zurückzumelden, wobei
die Konfigurationsinformationen Informationen über Unterblöcke, die derartige Klassen CSI-RS senden, den Sendezyklus derartiger CSI-RS, das Codebuch, das durch das Anwendergerät verwendet wird, wenn ein Kanalmessergebnis für derartige CSI-RS zurückgemeldet wird, und physische Betriebsmittel, die durch derartige CSI-RS verwendet werden, enthalten.

**Revendications**

1. Procédé (100, 200) permettant une mesure de canal et une réinjection d'un réseau d'antennes multidimensionnel dans un système de communication sans fil, le procédé étant **caractérisé par** les étapes comprenant :

    la génération (102, 202) d'une information de configuration pour au moins deux classes de signaux de référence d'information d'état de canal, CSI-RS, chacune des au moins deux classes de CSI-RS étant destinée à être utilisée dans une mesure de canal au niveau d'un équipement d'utilisateur pour une directivité différente de propagation de signal du réseau d'antennes multidirectionnel ; et
    la transmission (104, 204) de l'information de configuration à l'équipement d'utilisateur, de sorte que l'équipement d'utilisateur reçoive les au moins deux classes de CSI-RS selon l'information de configuration,
    l'information de configuration incluant au moins une information parmi : une information sur des sous-trames transmettant une telle classe de CSI-RS, un cycle de transmission d'un tel CSI-RS, un livre de codes utilisé par l'équipement d'utilisateur lors de la réinjection d'une mesure de canal pour un tel CSI-RS, et des ressources physiques utilisées par un tel CSI-RS.

2. Procédé (100, 200) selon la revendication 1, dans lequel l'information de configuration indique que les au moins deux classes de CSI-RS sont transmises simultanément à l'équipement d'utilisateur dans une même sous-trame.

3. Procédé (100, 200) selon la revendication 1, dans lequel l'information de configuration indique que les au moins deux classes de CSI-RS sont transmises en alternance à l'équipement d'utilisateur dans différentes sous-trames.

4. Procédé (100, 200) selon la revendication 3, dans lequel l'information de configuration indique que les au moins deux classes de CSI-RS sont transmises à l'équipement d'utilisateur dans différentes sous-trames avec des cycles égaux.

5. Procédé (100, 200) selon la revendication 3, dans lequel l'information de configuration indique que les au moins deux classes de CSI-RS sont transmises à l'équipement d'utilisateur dans différentes sous-trames avec des cycles différents.

6. Procédé (400, 500) permettant une mesure de canal et une réinjection d'un réseau d'antennes multidimensionnel dans un système de communication sans fil, le procédé étant **caractérisé par** les étapes comprenant :

    la réception (402, 502), en provenance d'une station de base, d'une information de configuration pour au moins deux classes de signaux de référence d'information d'état de canal, CSI-RS, chacune des au moins deux classes de CSI-RS étant destinée à être utilisée dans une mesure de canal pour une directivité différente de propagation de signal du réseau d'antennes multidirectionnel ; et
    la réception (404, 504), en provenance de la station de base, des au moins deux classes de CSI-RS selon l'information de configuration, pour réaliser (506) et réinjecter (508) des mesures de canal pour différentes directivités de propagation de signal du réseau d'antennes multidirectionnel,
    l'information de configuration incluant au moins une information parmi : une information sur des sous-trames transmettant une telle classe de CSI-RS, un cycle de transmission d'un tel CSI-RS, un livre de codes utilisé par l'équipement d'utilisateur lors de la réinjection d'une mesure de canal pour un tel CSI-RS, et des ressources physiques utilisées par un tel CSI-RS.

7. Procédé (400, 500) selon la revendication 6, dans lequel la réception des au moins deux classes de CSI-RS en provenance de la station de base selon l'information de configuration comprend :
la réception simultanée des au moins deux classes de CSI-RS dans une même sous-trame en provenance de la station de base selon l'information de configuration.

8. Procédé (400, 500) selon la revendication 6, dans lequel la réception des au moins deux classes de CSI-RS en provenance de la station de base selon l'information de configuration comprend :
la réception en alternance des au moins deux classes de CSI-RS dans différentes sous-trames en provenance de la station de base selon l'information de configuration.

9. Procédé (400, 500) selon la revendication 8, dans lequel la réception en alternance des au moins deux classes de CSI-RS dans différentes sous-trames en provenance de la station de base selon l'information de configuration comprend :

la réception, en provenance de la station de base, des au moins deux classes de CSI-RS dans différentes sous-trames avec des cycles égaux selon l'information de configuration.

10. Procédé (400, 500) selon la revendication 8, dans lequel la réception en alternance des au moins deux classes de CSI-RS dans différentes sous-trames en provenance de la station de base selon l'information de configuration comprend :
la réception, en provenance de la station de base, des au moins deux classes de CSI-RS dans différentes sous-trames avec des cycles différents selon l'information de configuration.

11. Procédé (400, 500) selon la revendication 6, dans lequel les mesures de canal pour une directivité différente de propagation de signal du réseau d'antennes multidirectionnel sont réalisées en sélectionnant différents livres de codes.

12. Procédé (400, 500) selon la revendication 11, dans lequel des livres de codes utilisés pour les mesures de canal pour une directivité différente de propagation de signal du réseau d'antennes multidirectionnel sont obtenus à partir d'un livre de codes commun selon des restrictions de sous-ensembles de livres de codes respectifs.

13. Procédé (400, 500) selon la revendication 12, dans lequel un livre de codes utilisé pour une mesure de canal pour une directivité verticale de propagation de signal du réseau d'antennes multidirectionnel est un sous-ensemble de livres de codes provenant du livre de codes commun, le sous-ensemble de livres de codes se conformant à un livre de codes à transformée de Fourier discrète (DFT) .

14. Appareil (600) permettant une mesure de canal et un retour d'informations d'un réseau d'antennes multidimensionnel dans un système de communication sans fil, l'appareil étant **caractérisé par** :

un moyen de génération d'information de configuration (602), pour générer une information de configuration pour au moins deux classes de signaux de référence d'information d'état de canal, CSI-RS, chacune des au moins deux classes de CSI-RS étant destinée à être utilisée dans une mesure de canal au niveau d'un équipement d'utilisateur pour une directivité différente de propagation de signal du réseau d'antennes multidirectionnel ; et
un moyen de transmission d'information de configuration (604), pour transmettre l'information de configuration à l'équipement d'utilisateur, de sorte que l'équipement d'utilisateur reçoive les au moins deux classes de CSI-RS selon l'information de configuration,
l'information de configuration incluant au moins une information parmi : une information sur des sous-trames transmettant une telle classe de CSI-RS, un cycle de transmission d'un tel CSI-RS, un livre de codes utilisé par l'équipement d'utilisateur lors de la réinjection d'une mesure de canal pour un tel CSI-RS, et des ressources physiques utilisées par un tel CSI-RS.

15. Appareil (700) permettant une mesure de canal et un retour d'informations d'un réseau d'antennes multidimensionnel dans un système de communication sans fil, l'appareil étant **caractérisé par** :

un moyen de réception d'information de configuration (702), pour recevoir, en provenance d'une station de base, une information de configuration pour au moins deux classes de signaux de référence d'information d'état de canal, CSI-RS, chacune des au moins deux classes de CSI-RS étant destinée à être utilisée dans une mesure de canal pour une directivité différente de propagation de signal du réseau d'antennes multidirectionnel ; et
un moyen de réception de signal de référence (704), pour recevoir les au moins deux classes de CSI-RS en provenance de la station de base selon l'information de configuration, pour réaliser et réinjecter des mesures de canal pour une directivité différente de propagation de signal du réseau d'antennes multidirectionnel,
l'information de configuration incluant au moins une information parmi : une information sur des sous-trames transmettant une telle classe de CSI-RS, un cycle de transmission d'un tel CSI-RS, un livre de codes utilisé par l'équipement d'utilisateur lors de la réinjection d'une mesure de canal pour un tel CSI-RS, et des ressources physiques utilisées par un tel CSI-RS.

Method 100

Start

S102   Generate configuration information for at least two classes of CSI-RS, each class of CSI-RS being for use in a channel measurement at the UE for a different dimension of the multi-dimensional antenna array

S104   Transmit the configuration information to the UE so that the UE receives the at least two classes of CSI-RS according to the configuration information

End

Fig. 1

Method 200

Start

S202 Generate configuration information for at least two classes of CSI-RS, each class of CSI-RS being for use in a channel measurement at the UE for a different dimension of the multi-dimensional antenna array

S204 Transmit the configuration information to the UE so that the UE receives the at least two classes of CSI-RS according to the configuration information

S206 Transmit at least two classes of CSI-RS to the UE according to the generated configuration information

S208 Receive from the UE a feedback of the channel measurements for different dimensions of the multi-dimensional antenna array

End

Fig. 2

Fig. 3A

Fig. 3B

Method 400

Start

S402 Receive, from a base station, configuration information for at least two classes of CSI-RS, each class of CSI-RS being for use in a channel measurement for a different dimension of the multi-dimensional antenna array

S404 Receive at least two classes of CSI-RS from the base station according to the configuration information

End

Fig. 4

Method 500

Start

S502  Receive from a base station configuration information for at least two classes of CSI-RS, each class of CSI-RS being for use in a channel measurement for a different dimension of the multi-dimensional antenna array

S504  Receive at least two classes of CSI-RS from the base station according to the configuration information

S506  Perform channel measurements for different dimensions of the multi-dimensional antenna array according to the received different classes of CSI-RS to generate channel measurement feedback

S508  Transmit to the base station the channel measurement feedback for different dimensions of the multi-dimensional antenna array

End

Fig. 5

600 Apparatus

602 Configuration information generating means

604 Configuration information transmitting means

Fig. 6

700 Apparatus

702 Configuration information receiving means

704 Reference signal receiving means

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012151143 A

- WO 2012112281 A